Europäisches Patentamt

(19) European Patent Office

Office européen des brevets

(11) Veröffentlichungsnummer: **0 075 197**
**B2**

(12) ## NEUE EUROPÄISCHE PATENTSCHRIFT

(45) Veröffentlichungstag der neuen Patentschrifft:
28.02.90

(21) Anmeldenummer: 82108280.7

(22) Anmeldetag: 09.09.82

(51) Int. Cl. $^5$: **C 09 C 1/00, C 09 C 1/36, C 09 C 3/06**

(54) Flockungsstabile Mischphasenpigmente mit Rutilstruktur, Verfahren zu ihrer Herstellung sowie ihre Verwendung.

(30) Priorität: 19.09.81 DE 3137384

(43) Veröffentlichungstag der Anmeldung:
30.03.83 Patentblatt 83/13

(45) Bekanntmachung des Hinweises auf die Patenterteilung:
10.09.86 Patentblatt 86/37

(45) Bekanntmachung des Hinweises auf die Entscheidung über den Einspruch:
28.02.90 Patentblatt 90/09

(84) Bennante Vertragsstaaten:
AT BE CH DE FR GB IT LI NL SE

(56) Entgegenhaltungen:
DE-A-1 592 830
DE-A-1 592 956
DE-A-2 009 160
DE-A-2 936 746
DE-A-2 948 334
DE-B-1 080 245
DE-C-2 223 524
FR-A-2 075 544
FR-A-2 303 052
GB-A-1 007 449
GB-A-2 088 348
US-A-2 224 777
US-A-2 387 534
US-A-3 022 186
US-A-3 022 186
ZA-A-635 042

DEFAZET Deutsche Farbenzeitschrift, 32. Jahrgang.
Nr.9-1979, S.322-331; 28.Jahrgang, Nr. 10, 1974, S. 44;

(73) Patentinhaber: BAYER AG
D-5090 Leverkusen 1 Bayerwerk (DE)

(72) Erfinder: Messer, Dieter, Dr. Dipl.-Chem.
Roggendorfstrasse 63
D-5000 Koeln 80 (DE)
Erfinder: Wilhelm, Volker, Dr. Dipl.-Chem.
An der Ruthen 2
D-5000 Koeln 80 (DE)
Erfinder: Endres, Robert, Dr. Dipl.-Chem.
Hahnenweg 1
D-5000 Koeln 80 (DE)
Erfinder: Heine, Heinrich, Dr. Dipl.-Chem.
Bärenstrasse 13
D-4150 Krefeld (DE)

(56) Entgegenhaltungen (fortsetzung):
J. Oil.Col. Chem. Assoc. 1977, 60, S.365-376;

Ullmanns Encyklopädie der technischen Chemie, 1979, Bd. 18, 4. Aufl.,S. 565-568, 578-599; 1962, Bd. 13, 3. Aufl., S. 766-767;

Die Akte enthält technische Angaben, die nach dem Eingang der Anmeldung eingereicht wurden und die nicht in dieser Patentschrift enthalten sind.

EP 0 075 197 B2

**Beschreibung**

Gegenstand der vorliegenden Erfindung sind bunte Rutilmischphasenpigmente mit Nickel, Chrom, Kupfer und/oder Mangan als farbgebende Metallionen mit einer Beschichtung aus Oxiden und/oder Oxidhydraten der Metalle Titan und/oder Zirconium und/oder Zinn in der Oxidationsstufe 4 und einer abschließenden Beschichtung aus Oxiden und/oder Oxidhydraten des Aluminiums. Verfahren zur Herstellung dieser Pigmente sowie deren Verwendung.

Mischphasenpigmente mit Rutilstruktur sind lange bekannt. Durch Einbau von Metalloxiden, wie z. B. $NiO$, $Cr_2O_3$, $CuO$, $MnO$ mit $Sb_2O_5$. $Nb_2O_5$, $WO_3$ in das Kristallgitter des Titandioxids kann man Mischoxide mit Rutilstruktur herstellen, deren Farbtöne sich über weite Bereiche des sichtbaren Spektrums erstrecken.

Weicht die Wertigkeit des eingebauten farbgebenden Metallions von 4 ab, so wird zum Valenzausgliech ein weiteres Metalloxid mit anderer Wertigkeit in das Rutilgitter eingebaut, so daß die eingebauten Metalloxide im Gitter folgender Bedingung genügen:

$$\frac{aA^{n+}O_n}{2} + \frac{bB^{m+}O_m}{2} = (a+b)\frac{(Aa}{(a+b)}\frac{Bb)}{a+b)}O_2$$

Daraus folgt für a und b:

$$a \cdot n + b \cdot m = 4(a+b)$$

Dabei bedeuten:

A: ein einbaufähiges Metall, z. B. $Cr^{3+}$, $Ni^{2+}$, $Cu^{2+}$, $Mn^{3+}$
b: ein einbaufähiges Metall, z. B. $Sb^{5+}$, $Nb^{5+}$, $W^{6+}$
O: Sauerstoffatom
n: Wertigkeit des eingebauten Metall A, wobei n = 2, 3
m: Wertigkeit des eingebauten Metall B, wobei m = 5, 6
a, b:      kleine, ganze Zahlen.

In der Regel werden diese Verhältnisse weitgehend eingehalten, es sind aber auch Rutilmischphasenpigmente bekannt, bei denen eine stärkere Abweichung von dieser idealisierten Zusammensetzung vorkommt.

Größere technische Bedeutung haben die Nickel- und Chrom-Rutilmischphasenpigmente erlangt. Beim Einbau von Nickeloxid und Chromoxid als farbgebende Oxide in $TiO_2$ werden zum Wertigkeitsausgleich höherwertige Metalloxide, besonders von Antimon, aber auch von Niob und/oder Wolfram eingebaut (US-1 945 809, US-2 251 829, US-2 257 278, US-3 832 205).

Die Herstellung solcher Pigmente wird durch Glühung von Anatas und/oder Hydraten des Titandioxides mit einbaufähigen Metalloxiden oder diese liefernde Verbindungen bewirkt (US-3 022 186).

Die Glühprodukte werden gewöhnlich in Wasser suspendiert. Durch Mahlung (bevorzugt Naßmahlung) auf die erwünschte Teilchengröße und nachfolgende Aufarbeitung (Waschen, Trocknen und desagglomerierendes Mahlen) erhält man üblicherweise diese Pigmente in der Endform.

Je nach Aufarbeitung erhält man Produkte, deren pH-Wert (nach DIN 53 200) schwach basisch bis schwach sauer ist.

In säurekatalytisch härtenden Lacken neigen Rutil-Mischpigmente in unbehandelter Form zu mehr oder weniger starker Flockung, die bekanntermaßen zu einer Farbtonveränderung führt.

Nachbehandlungen von Rutilmischphasenpigmenten auf anorganischer Basis sind in der Literatur bekannt. So werden z B. nach DE-OS-2 936 746 die Rohpigmente zunächst mit einem oberflächenaktiven Mittel behandelt, bevor eine einfache Metalloxidhydratschicht z. B. der Elemente Ti, Zr, Sn und Al aufgebracht wird.

Rutilmischphasenpigmente mit einer einschichtigen anorganischen Nachbehandlung zeichnen sich zwar durch eine verbesserte Dispergierbarkeit aus, zeigen aber in säurekatalytisch härtenden Lacken keine wesentliche Verbesserung der Flockungsneigung.

Das Ziel der vorliegenden Anmeldung ist es somit, neue Rutilmischphasenpigmente zur Verfügung zu stellen, die die genannten Nachteile nicht aufweisen.

Es wurden nun überraschenderweise Pigmente gefunden, die diese Forderungen in hervorragender Weise erfüllen.

Diese sind bunte Rutilmischphasenpigmente mit Nickel, Chrom, Kupfer und/oder Mangan als farbgebende Metallionen mit einer Beschichtung aus Oxiden und/oder Oxidhydraten der Metalle Titan und/oder Zirconium und/oder Zinn in der Oxidationsstufe und einer abschließenden Beschichtung aus Oxiden und/oder Oxidhydraten des Aluminiums.

Besonders gute Ergebnisse zeigen in ihren Eigenschaften die Rutilmischphasenpigmente, in denen die Beschichtung aus Oxiden und/oder Oxidhydraten der Metalle Titan und/oder Zirconium und/oder Zinn zwischen 0,5 und 20 Gew.-%, bevorzugt 1 bis 10 Gew.-%, bezogen auf das Trockenpigment und die der Oxide und/oder Oxidhydrate des Aluminiums 0,5 bis 20 Gew.-%, bevorzugt 1 bis 10 Gew.-%, bezogen auf das Trockenpigment, beträgt.

Der Flockungseffekt der erfindungsgemäßen Rutilmischphasenpigmente ist nur sehr gering.

Diese verbesserten Pigmente enthalten Behandlungsschichten von z. B. $TiO_2/Al_2O_3$, $ZrO_2/Al_2O_3$, $SnO_2/Al_2O_3$ oder $Al_2O_3$ auf beliebigen Mischungen von $TiO_2$, $ZrO_2$ und $SnO_2$. In der vorliegenden Anmeldung sollen unter $ZrO_2$, $SnO_2$, $TiO_2$ und $Al_2O_3$ auch die Hydroxide oder deren verschiedene Entwässerungsstufen, wie z. B. Oxidhydrate verstanden werden, ohne daß man deren genaue Zusammensetzung und Struktur kennt.

Die erfindungsgemäßen Pigmente können dadurch hergestellt werden, daß auf in wässriger Suspension vorliegende geglühte und gemahlene Rutilmischphasenpigmente die Oxidhydrate der Metalle Titan und/oder Zirconium und/oder Zinn und daran anschließend die Oxidhydrate des Alumminium gefällt, Pigmente dann gewaschen und getrocknet werden.

Diese Auffällung kann somit direkt in einer Suspension geschehen, wie sie im Herstellungsprozeß nach der Glühung und der sich anschließenden Naßmahlung anfällt.

Die Auffällung der Oxide und/oder Oxidhydrate der jeweiligen Metalle erfolgt im bekannten pH-Bereich, für das Aluminium zwischen 5 und 9.

Dabei werden die Metalle Titan, Zirconium und/oder Zinn und das Aluminium in Form wasserlöslicher Salze eingesetzt.

Die Nachbehandlung kann so vorgenommen werden, daß man eine wäßrige Pigmentsuspension mit einer Titanylsulfatlösung mischt, $TiO_2$-Oxidhydrat durch Zugabe von NaOH fällt, die Suspension anschließend mit einer Aluminiumsulfatlösung mischt und durch weitere Zugabe von Natronlauge im pH-Bereich zwischen 5 und 9 Aluminium als Oxidhydrat auffällt.

Im Falle einer $ZrO_2$-Oxidhydrat-Nachbehandlung geht man analog von einer Zirconsulfatlösung aus.

Die Nachbehandlung kann erfolgen, indem zuerst die Pigmentsuspension unter Rühren bei Raumtemperatur oder erhöhter Temperatur bis ca. 80 °C vorliegt und die sauren Lösungen der 4-wertigen Metalle zugegeben werden. Es kann aber auch die saure Nachbehandlungslösung vorgelegt werden und die Pigmentsuspension danach unter Rühren hinzukommen.

Eine weitere mögliche Ausführungsform besteht darin, daß die Auffällung der Oxidhydrate der 4-wertigen Metalle durch Zugabe einer Alkalialuminatlösung erfolgt.

Die Pigmentkonzentration wird aus Gründen der Raum-Zeit-Ausbeute kaum unter 10 Gew.-% liegen. Üblicherweise liegt sie höher, solange die Suspension rührfähig bleibt, in bestimmten Fällen (hohe Pigmentteilchengröße) bis zu 60 Gew.-%. Der Anteil der Oxide $MO_2$ 4-wertiger Metalle soll insgesamt zwischen 0,5 und 20 Gew.-%, bevorzugt zwischen 1 - 10 Gew.-% $MO_2$ (M = Ti, Zr, Sn) liegen, bezogen auf Trockenpigment.

Im Anschluß an die $MO_2$-Fällung erfolgt die Abscheidung von $Al_2O_3$. Dazu wird die Pigmentsuspension mit einer Aluminiumsalzlösung versetzt. Geht man z. B. von einer Aluminiumsulfatlösung aus, so soll der pH-Wert der Vorlage unter 4 liegen, um eine Teilhydrolyse während der Zugabe zu verhindern.

Geht man jedoch von einer Alkalialuminatlösung aus, sollte der pH-Wert der Vorlage im stark alkalischen Bereich liegen. In beiden Fällen wird dann das Aluminiumoxid im pH-Bereich zwischen 5 und 9, bevorzugt zwischen 7 und 8,5 gefällt.

Der pH-Wert der fertigen Suspension soll zwischen 7 und 10, bevorzugt zwischen 7,5 und 8,5, liegen. Falls die in den wäßrigen Lösungen vorhandenen Säure- bzw. Alkalimengen hierzu nicht ausreichen, fügt man zur endgültigen Einstellung Säure oder Base zu.

Die Wirksamkeit der Stabilisierung gegen Flockung nimmt mit steigender $MO_2$ und $Al_2O_3$ Menge zu. Aus praktischen Erwägungen wird man sie jedoch nur so hoch wählen, wie sie für den gewünschten Stabilisierungseffekt erforderlich ist.

Nach der Auffällung der Metalloxide wird die Suspension noch 15 min bis 2 h gerührt, wobei die aufgefällten Schichten eine Alterung erfahren, wodurch die Filtrierbarkeit verbessert wird.

Der erfindungsgemäße Verfahren führt zu Rutilmischphasenpigmenten, die in säurekatalytisch härtenden Lacken auf Basis z. B. von Melaminharzen, Acrylaten, Alkydharzen, Maleinsäure-, Phenol-, Epoxidharzen, Polyestern und Polyurethanen, insbesondere Einbrenn- und Coil-Coat-Lacken flockungsstabil sind. Die erfindungsgemäßen Pigmente können natürlich auch in Systemen eingesetzt werden, in denen Flockungsstabilität nicht gefordert wird, z. B. bei der Pigmentierung von Kunststoffen.

Ein geeignetes Prüfverfahren zur Beurteilung der Flockungs- und damit Farbstabilität ist der Rub-out-Test, wie er im folgenden beschrieben ist.

Der Rub-out-Effekt ist eine durch Reiben in einer antrocknenden Schicht gegenüber einer unbeanspruchten Stelle hervorgerufene Farbänderung. Sie tritt dann auf, wenn die Pigmenteinzelteilchen in der flüssigen Schicht nicht mehr statistisch gleichmäßig verteilt sind. Dies kann durch lokale Pigmentanreicherung wie bei der Flockung und beim Absetzen oder durch Entmischen von verschiedenartigen Pigmenteinzelteilchen beim Aus- und Aufschwimmen erfolgen. Durch das Reiben wird die gleichmäßige Verteilung der Pigmentteilzelteilchen wiederhergestellt. Sie bleibt im allgemeinen bis zur endgültigen Trocknung erhalten, wenn der Rub-out-Test zum Zeitpunkt durchgeführt wurde.

Bei Rutilmischphasenpigmenten kann in verschiedenen Bindemitteln sowohl im Purton als auch im Verschnitt dieser Rub-out-Effekt festgestellt werden. Die Größe des Effektes kann Farbmetrisch aus dem Farbabstand nach DIN 61 74 zwischen geriebener und ungeriebener Fläche bestimmt werden und stellt ein Maß für die Flockungsintensität dar.

Zu den vorliegenden Beispielen wurde der Rub-out-Test an den Purtönen der Lackaufstriche durchgeführt.

**Beispiel 1**

Ein Mol $TiO_2$ (als wäßrige 30-%-ige $TiO_2$-Hydratsuspension) wird mit basischer Chromsulfatlösung, entsprechen 0,03 Mol $Cr_2O_3$, 0,03 Mol $Sb_2O_3$ und 5 % Rutilkeimen, bezogen auf eingesetztes $TiO_2$-Hydrat, versetzt. Aus dieser Suspension wird Chromhydroxid mit Natronlauge ausgefällt. Die Suspension wird bis auf einen Feststoffgehalt von ca. 50 % eingedickt und 1 h bei 1 000°C geglüht. Anschließend erfolgt die Aufarbeitung der Rohfarbe, indem sie in Wasser suspendiert und in Kugel- und Sandmühlen zur Pigmentfeinheit aufgemahlen wird. Die erhaltene Suspension wird zur weiteren Behandlung verwendet.

**Vergleichsbeispiel 1 (V1)**

Die nach Beispiel 1 erhaltene Pigmentsuspension wird abfiltriert, salzfrei gewaschen, getrocknet und in einer Stiftmühle desagglomeriert. Das erhaltene orangegelbe Pigment wird in einer Einbrennlackierung mit und ohne Säurezusätz verarbeitet und jeweils der zugehörige «rub out» ermittelt. Die Werte für das Rutilpigment nach Beispiel 1 sind in Tabelle 1 aufgeführt, sowie die auf Beispiel 1 basierenden, nachbehandelten Folgepigmente.

Einbrennlackierung ohne Särezusatz:

Im «Red Devil» -Schüttelgerät wird eine Anreibung aus 29,6 g Alkydal R 35[*], 30-%-ig in Xylol und 47,05 g Pigment hergestellt (1 h Laufzeit).
10 g Anreibung werden mit 18,2 g Auflack auf Basis Alkydal R 35[*] und Maprenal MF 800[**] entsprechend einer PVK von 12 % vermischt und in 200 μm Schichtdicke auf Polyesterfolie aufgezogen. Nach 10 min Ablüftungszeit wird der «rub out» gemacht und die Lackierung anschließend 30 min bei 120°C eingebrannt.

Einbrennlackierung mit Säurezusatz:

Die Anreibung erfolgt wie vorbeschrieben. Rezeptur Auflack:

10 g Pigmentanreibung
18,2 g Auflack (wie vorbeschrieben)
1,13 g Phosphorsäuremonobutylester", 20-%-ig in Ethylglykol

Der Lack wird in 200 μm Schichtdicke auf Polyesterfolie aufgezogen und 15 min ablüften lassen. 40 Nach dem «rub out» wird die Lackierung 30 min bei 80°C gehärtet.

Rub-out-Test

Nach der Ablüftzeit wird zur farbmetrischen Auswertung eine genügend große Fläche der Lackierung (normalerweise die Hälfte des Aufstriches) gleichmäßig mit einem glatten Spatel in einer Längsrichtung gerieben, bis die geriebene Fläche farblich einheitlich erscheint. Es ist darauf zu achten, daß die geriebene Schicht homogen deckend bleibt. Danach wird die vorgeschriebene Zeit eingebrannt.

Auswertung:

Von der geriebenen und nicht geriebenen Fläche werden die Hunter-Lab-Koordinaten ausgemessen und der Farbabstand $\Delta E^*$ nach DIN 6174 (Farbmetrische Bestimmung von Farbabständen von Körperfarben nach der CIELAB-Formel) bestimmt:

$$\Delta E_{ab}^* = \sqrt{(\Delta L*)^2 + (\Delta a*)^2 + (\Delta b*)^2}$$

[*]   Handelsprodukte der BAYER AG
[**]  Handelsprodukte der Casella

**Beispiel 2**

Entsprechend 2 Gew.-% $TiO_2$, bezogen auf Trockenpigment, wird in einem Rührbehälter bei Raumtemperatur eine Titanylsulfatlösung (ca. 120 g $TiO_2$/l) vorgelegt, die nach Beispiel 1 erhaltene Pigmentsuspension entsprechend einer Feststoffkonzentration von 300 g/l zugegeben und 1 h nachgerührt.
Es stellt sich ein pH-Wert von 1,5 ein. Mit halbkonzentrierter NaOH wird auf pH 7 gestellt, 1 h nachgerührt, abfiltriert, salzfrei gewaschen, (Leitfähigkeit des Filtrates ~ 1 mS) und getrocknet.

**Beispiel 3**

Entsprechend 2 Gew.-% $ZrO_2$, bezogen auf Trockenpigment, wird $Zr(SO_4)_2 \cdot 4 H_2O$ in 10-%-iger $H_2SO_4$ gelöst und wie in Beispiel 2 die Pigmentsuspension unter Rühren zugegeben und 1 h nachgerührt. Der pH-Wert wird von 1,3 auf pH 7 mit halbkonzentrierter NaOH eingestellt, 1 h nachgerührt, das Pigment abfiltriert, salzfrei gewaschen und getrocknet.

**Beispiel 4**

Entsprechend 2 Gew.-% $Al_2O_3$, bezogen auf Trockenpigment, wird $Al_2(SO_4)_3$ 18 $H_2O$ in 10-%-iger $H_2SO_4$ gelöst und wie in Beispiel 2 die Pigmentsuspension unter Rühren zugegeben und 1 h nachgerührt. Der pH-Wert wird von 1,5 auf 8,0 mit halbkonzentrierter NaOH eingestellt und das Pigment wie vorbeschrieben aufgearbeitet.

**Beispiel 5**

In einem Rührbehälter wird 50-%-ige $H_2SO_4$ zusammen mit einer Titanylsulfatlösung (ca. 120 g $TiO_2l$), entsprechend 2 Gew.-% $TiO_2$, bezogen auf Trockenpigment, gegeben. In die Vorlage läßt man bei Raumtemperatur die Pigmentsuspension, nach Beispiel 1 erhalten, zulaufen und rührt bei pH 1 ca. 1 h bei Raumtemperatur nach. Anschließend wird mit halbkonzentrierter NaOH auf pH 8,5 gestellt und 1/2 h gerührt. Danach wird der pH-Wert mit halbkonzentrierter $H_2SO_4$ auf 3,5 gestellt und schwefelsaure Aluminiumsulfatlösung entsprechend 4 Gew.-% $Al_2O_3$, bezogen auf Trockenpigment, zugegeben 1/2 h bei pH zwischen 2 und 3 nachgerührt, mit halbkonzentrierter NaOH auf pH 8,5 gestellt und nochmals 1/2 h nachgerührt. Anschließend wurde das Pigment wie vorbeschrieben aufgearbeitet.

**Beispiel 6**

In einem Rührbehälter wird 50-%-ige Schwefelsäre vorgelegt, dazu $Zr(SO_4)_2 \cdot 4 H_2O$ entsprechend 2 Gew.-% $ZiO_2$, bezogen auf Trockenpigment, gegeben und gelöst. In die Vorlage läßt man bei ca. 60°C die nach Beispiel 1 erhaltene Pigmentsuspension zulaufen und rührt bei pH 1 ca. 1 h bei Raumtemperatur. Anschließend wird mit halbkonzentrierter NaOH auf pH 8,5 gestellt und 1/2 h gerührt. Danach wird der pH-Wert mit halbkonzentrierter $H_2SO_4$ auf 3,5 gestellt und mit schwefelsaurer Aluminiumsulfatlösung entsprechend 2 Gew.-% $Al_2O_3$, bezogen auf Trockenpigment, zugegeben, 1/2 h bei pH zwischen 2 und 3 nachgerührt, mit halbkonzentrierter NaOH auf pH 8,5 gestellt und nochmals 1/2 h nachgerührt. Anschließend wird das Pigment wie vorbeschrieben aufgearbeitet.

**Beispiel 7**

Die Nachbehandlung erfolgt wie in Beispiel 6 beschrieben mit dem Unterschied, daß die Auffällung bei Raumtemperatur durchgeführt wird und die eingesetzten Metallsulfatlösungen 3 % $ZrO_2$ und 5 % $Al_2O_3$ entsprechen.

**Beispiel 8**

In einem Rührbehälter wird bei Raumtemperatur eine Lösung von $SnCl_4$ in konzentrierter Salzsäure entsprechend 2 Gew.-% $SnO_2$, bezogen auf Trockenpigment, vorgelegt und Pigmentsuspension nach Beispiel 1 zufließen lassen (pH-Wert 0,9). Die Suspension wird mit konzentriertem Ammoniak auf pH 8,5 gebracht, 1/2 h nachgerührt und mit 10-%-iger $H_2SO_4$ auf pH 3,5 gestellt. Anschließend gibt man eine schwefelsaure Aluminiumsulfatlösung entsprechend 4 Gew.-% $Al_2O_3$, bezogen auf Trockenpigment zu (pH 2,0) stellt mit halbkonzentrierter NaOH auf pH 8,5 und rührt 1/2 h bei Raumtemperatur nach. Anschließend wird wie vorbeschrieben das Pigment aufgearbeitet.

**Beispiel 9**

Ein Mol $TiO_2$ (als wäßrige, 30-%-ige Hydratsuspension) wird mit 5 Mol % Antimonoxid, 7 Mol Nickeloxid sowie 5 Gew.-% Rutilkeimen (auf eingesetztes $TiO_2$ bezogen), versetzt und intensiv gemischt. Nach der Glühung der auf ca. 50 % eingedickten Suspension bei 900°C wird die Rohfarbe in Wasser suspendiert und in Kugel- und Sandmühlen bis zur Pigmentfeinheit aufgemahlen. Die erhaltene Suspension wird zur weiteren Behandlung verwendet.

**Vergleichsbeispiel 2 (V2)**

Die nach Beispiel 9 hergestellte Pigmentsuspension wird abfiltriert, salzfrei gewaschen, getrocknet und in einer Stiftmühle desagglomeriert. Das brillante zitronengelbe Rutilpigment wird analog zu V1 mit und ohne Säurezusatz im Einbrennlack verarbeitet, wie auch die nachbehandelten Pigmente und der «rub out» ermittelt (Tabelle 1).

**Beispiel 10**

In einem Rührbehälter wird bei Raumtemperatur Titanylsulfatlösung (ca. 120 g $TiO_2$/l) entsprechend 2 Gew.-% $TiO_2$, bezogen auf Trockenpigment, vorgelegt und die nach Beispiel 9 hergestellte Pigmentsuspension (ca. 400 g Feststoff/l) unter Rühren zugegeben (pH 0,9). Nach Zugabe von halbkonzentrierter Natronlauge bis pH 8,8 wird 1/2 h nachgerührt und anschließend mit halbkonzentrierter $H_2SO_4$ auf pH 3,5 gestellt. In die Suspension läßt man bei Raumtemperatur schwefelsaure Aluminiumsulfatlösungen entsprechend 4 Gew.-% $Al_2O_3$, bezogen auf Trockenpigment, einlaufen (pH 2,2) und stellt auf pH 8,5. Nach der Nachrührzeit von 1/2 h wird das Pigment salzfrei gewaschen (Leitfähigkeit des Filtrates unter 1 mS), getrocknet und in einer Stiftmühle desagglomeriert.

**Beispiel 11**

In einem Rührbehälter wird $Zr(SO_4)_2 \cdot 4 H_2O$ in 10-%-iger $H_2SO_4$ gelöst, entsprechend 2 Gew.-% $ZrO_2$, bezogen auf Trockenpigment, und die nach Beispiel 9 hergestellten Pigmentsuspension zugegeben (pH 0,8). Nach Zugabe von halbkonzentrierter Natronlauge wird wie in Beispiel 10 weitergearbeitet, entsprechend einer Auffällung von 4 Gew.-% $Al_2O_3$, bezogen auf Trockenpigment.

**Tabelle 1**

| Beispiel | "rub out" der Einbrennlackierung | |
|---|---|---|
| | Ohne Säure (E*) | Mit Säure (E*) |
| V 1 | 0,65 | 4,38 |
| 2 | 0,63 | 3,71 |
| 3 | 0,65 | 3,57 |
| 4 | 0,60 | 3,10 |
| 5 | 0,20 | 0,30 |
| 6 | 0,34 | 0,53 |
| 7 | 0,18 | 0,35 |
| 8 | 0,40 | 0,81 |
| V 2 | 0,44 | 2,55 |
| 10 | 0,20 | 0,49 |
| 11 | 0,16 | 0,52 |

**Patentansprüche**

1. Bunte Rutilmischphasenpigmente mit Nickel, Chrom, Kupfer und/oder Mangan als farbgebende Metallionen mit einer Beschichtung aus Oxiden und/oder Oxidhydraten der Metalle Titan und/oder Zirconium und/oder Zinn in der Oxidationsstufe 4 und einer abschließenden Beschichtung aus Oxiden und/oder Oxidhydraten des Aluminiums.

2. Bunte Rutilmischphasenpigmente gemäß Anspruch 1, dadurch gekennzeichnet, daß die Beschichtung aus Oxiden und/oder Oxidhydraten der Metalle Titan und/oder Zirconium und/oder Zinn zwischen 0,5 und 20 Gew.-%, bevorzugt 1 bis 10 Gew.-%, bezogen auf das Trockenpigment, und die Oxide und/oder Oxidhydrate des Aluminiums 0,5 bis 20 Gew.-%, bevorzugt 1 bis 10 Gew.-% bezogen auf das Trockenpigment, beträgt.

3. Verfahren zur Herstellung der bunten Rutilmischphasenpigmente gemäß einem der Ansprüche 1 oder 2, dadurch gekennzeichnet, daß auf wäßriger Suspension vorliegende geglühte und gemahlene bunte Rutilmischphasenpigmente die Oxide und/oder Oxidhydrate der Metalle Titan und/oder Zirconium und/oder Zinn und daran anschließend die Oxide und/oder Oxidhydrate des Aluminiums gefällt, die Pigmente dann gewaschen und getrocknet werden.

4. Verfahren gemäß 3, dadurch gekennzeichnet, daß die Pigmentkonzentration in der Suspension zwischen 10 und 60 Gew.-% beträgt und die 4-wertigen Metalle in Mengen von 0,5 bis 20 Gew.-%, bevorzugt von 1 bis 10 Gew-%, bezogen auf Metalloxid, das Aluminium zwischen 0,5 und 20 Gew.-%, bevorzugt von 1 bis 10 Gew.-%, bezogen auf Trockenpigment, aufgebracht werden.

5. Verfahren gemäß einem der Ansprüche 3 oder 4, dadurch gekennzeichnet, daß die Metalle Titan, Zirconium und/oder Zinn in Form saurer Lösungen, das Aluminium als Aluminiumsulfat eingesetzt werden.

6. Verfahren gemäß einem der Ansprüche 3 bis 5, dadurch gekennzeichnet, daß man eine wäßrige Pigmentsuspension mit einer Titanylsulfatlösung mischt, $TiO_2$-Oxidhydrat durch Zugabe von NaOH fällt, die Suspension anschließend mit einer Aluminiumsulfatlösung mischt und durch weitere Zugabe von Natronlauge im pH-Bereich 5 und 9 Aluminium als Oxidhydrat ausfällt.

7. Verfahren gemäß einem der Ansprüche 3 bis 5, dadurch gekennzeichnet, daß man eine wäßrige Pigmentsuspension mit einer Zirkonsulfatlösung mischt, ZrO₂ durch Zugabe von NaOH bei pH 5 fällt, die Suspension anschließend mit einer Aluminiumsulfatlösung mischt und weitere Zugabe von Natronlauge im pH-Gereich zwischen 5 und 9 Aluminium als Oxidhydrat auffällt.

8. Verwendung der bunten Rutilmischphasenpigmente gemäß einem der Ansprüche 1 oder 2 zur Pigmentierung von Kunststoffen sowie Lacksystemen.


## Claims

1. Coloured rutile mixed-phase pigments containing nickel, chromium, copper and/or manganese as colouring metal ions with a coating of oxides and/or oxide hydrates of the metals titanium and/or zirconium and/or tin in oxidation stage 4 and a final coating of oxides and/or oxide hydrates of aluminium.

2. Coloured rutile mixed-phase pigments as claimed in claim 1, characterized in that the coating of oxides and/or oxide hydrates of the metals titanium and/or zirconium and/or tin comprises 0.5 to 20 % by weight and preferably 1 to 10 % by weight, based on the dry pigment, and the coating of oxides and/or oxide hydrates of aluminium 0.5 to 20 % by weight and preferably 1 to 10 % by weight, based on the dry pigment.

3. A process for the production of the coloured rutile mixed-phase pigments claimed in claim 1 or 2, characterized in that the oxides and/or oxide hydrates of the metals titanium and/or zirconium and/or tin and then the oxide and/or oxide hydrates of aluminium are precipitated onto calcined and ground coloured rutile mixed-phase piments present in aqueous suspension, after which the pigments are washed and dried.

4. A process as claimed in claim 3, characterized in that the pigment concentration in the suspension is between 10 and 60 % by weight and the 4-valent metals are applied in quantities of 0.5 to 20 % by weight and preferably 1 to 10 % by weight, based on metal oxide, and the aluminium in quantities of 0.5 to 20 % by weight and preferably 1 to 10 % by weight, based on dry pigment.

5. A process as claimed in claim 3 or 4, characterized in that the metals titanium, zirconium and/or tin are used in the form of acidic solutions and the aluminium in the form of aluminium sulfate.

6. A process as claimed in any of claims 3 to 5, characterized in that an aqueous pigment suspension is mixed with a titanyl sulfate solution, the TiO₂ oxide hydrate is precipitated by addition of NaOH, the suspension is then mixed with an aluminium sulfate solution and the aluminium is precipitated as oxide hydrate by addition of more sodium hydroxide in the pH range from 5 to 9.

7. A process as claimed in any of claims 3 to 5, characterized in that an aqueous pigment suspension is mixed with a zirconium sulfate solution, ZrO₂ is precipitated by addition of NaOH at pH 5, the suspension is then mixed with an aluminium sulfate solution and aluminium is precipitated as oxide hydrate by addition of more sodium hydroxide in the pH range from 5 to 9.

8. The use of the coloured rutile mixed-phase pigments claimed in claim 1 or 2 for pigmenting plastics and paint systems.


## Revendications

1. Pigments de diverses couleurs à phases mixtes de rutile comportant du nickel, du chrome, du cuivre et/ou du manganèse en tant qu'ions métalliques donnant de la couleur, avec une couche d'oxydes et/ou d'oxydes hydratés des métaux titane et/ou zirconium, et/ou étain au stade d'oxydation 4 et avec une couche terminale d'oxydes et/ou d'oxydes hydratés d'aluminium.

2. Pigments de diverses couleurs à phases mixtes de rutile selon la revendication 1, caractérisés en ce que la couche d'oxydes et/ou d'oxydes hydratés des métaux titane et/ou zirconium et/ou étain représente entre 0,5 et 20% en poids, de préférence 1 à 10 % en poids par rapport au pigment sec et les oxydes et/ou oxydes hydratés de l'aluminium 0,5 à 20 % en poids, de préférence 1 à 10 % en poids par rapport au pigment sec.

3. Procédé de fabrication des pigments de diverses couleurs à phases mixtes de rutile selon l'une des revendications 1 ou 2, caractérisé en ce que sur les pigments de diverses couleurs à phases mixtes de rutile calcinés et broyés se présentant en suspension aqueuse on précipite les oxydes et/ou oxydes hydratés des métaux titane et/ou zirconium et/ou étain et par la suite les oxydes et/ou oxydes hydratés de l'aluminium, et puis on lave et sèche les pigments.

4. Procédé selon la revendication 3, caractérisé en ce que la concentration de pigment dans la suspension est comprise entre 10 et 60 % en poids et en ce que les métaux tétravalents sont appliqués en des quantités de 0,5 à 20 % en poids, de préférence de 1 à 10 % en poids par rapport à l'oxyde métallique et l'aluminium entre 0,5 et 20 % en poids, de préférence à raison de 1 à 10 % en poids par rapport au pigment sec.

5. Procédé selon l'une des revendications 3 ou 4, caractérisé en ce qu'on utilise les métaux titane, zirconium et/ou étain sous forme de solutions acides et l'aluminium sous forme de sulfate d'aluminium.

6. Procédé selon l'une des revendications 3 à 5, caractérisé en ce qu'on mélange une suspension aqueuse pigmentaire avec une solution de sulfate de titanyle, on précipite l'oxyde hydraté de $TiO_2$ par addition de NaOH, on mélange ensuite la suspension avec une solution de sulfate d'aluminium et l'on précipite l'aluminium sous forme d'oxyde hydraté par une nouvelle addition de soude caustique dans l'intervalle de pH compris entre 5 et 9.

7. Procédé selon l'une des revendications 3 à 5, caractérisé en ce qu'on mélange une suspension aqueuse pigmentaire avec une solution de sulfate de zirconium, on précipite le $ZrO_2$ par addition de NaOH à un pH de 5, on mélange ensuite la suspension avec une solution de sulfate d'aluminium et l'on précipite l'aluminium sous la forme d'oxyde hydraté par une nouvelle addition de soude caustique dans l'intervalle de pH compris entre 5 et 9.

8. Utilisation des pigments de diverses couleurs phases mixtes de rutile selon l'une des revendications 1 ou 2 pour la pigmentation de matières synthétiques de même que de systèmes de vernis.